# FASCICULE DE BREVET EUROPEEN

(11) **EP 1 402 523 B1**
(45) Date de publication et mention de la délivrance du brevet: **12.10.2005**
(21) Numéro de dépôt: 02745481.8
(22) Date de dépôt: 04.06.2002
(51) Int. Cl.: G11B 7/007, G11B 23/28

(54) **PROCEDE ET DISPOSITIF POUR LE MATRICAGE D'UN DISQUE OPTIQUE PROTEGE CONTRE LA COPIE ET DISQUE OPTIQUE PROTEGE CONTRE LA COPIE**
VERFAHREN UND VORRICHTUNG ZUM PRESSEN EINER KOPIERGESCHÜTZEN OPTISCHEN PLATTE, UND KOPIERGESCHÜTZE OPTISCHE PLATTE
METHOD AND DEVICE FOR MASTERING A COPY-PROTECTED OPTICAL DISC AND COPY-PROTECTED OPTICAL DISC

(30) Priorité: 07.06.2001 FR 0107685
(43) Date de publication de la demande: 31.03.2004
(73) Titulaire: TAGES, 92420 Vaucresson (FR)
(72) Inventeur: DUHAMEL, Jean-Louis, Thales Intellectual Prop., F-94117 Arcueil Cedex (FR); GUENERY, Laurent, Thales Intellectual Property, F-94117 Arcueil Cedex (FR); GODMER, Gérard, Thales Intellectual Property, F-94117 Arcueil Cedex (FR); DE MAGNIENVILLE, Sylvin, Thales Intellectual Prop., F-94117 Arcueil Cedex (FR); PIROT, François-Xavier, Thales Intellectual Prop., F-94117 Arcueil Cedex (FR)
(74) Mandataire: Brochard, Pascale
(86) Numéro de dépôt international: PCT/FR2002/001891
(87) Numéro de publication internationale: WO 2002/099794

(56) Documents cités:
- FR-A- 2 769 119
- FR-A- 2 787 232
- FR-A- 2 805 071
- PATENT ABSTRACTS OF JAPAN vol. 1996, no. 10, 31 octobre 1996 (1996-10-31) & JP 08 147767 A (VICTOR CO OF JAPAN LTD), 7 juin 1996 (1996-06-07)

## Description

La présente invention se rapporte à un procédé et un dispositif de matriçage pour la fabrication d'un disque optique protégé contre la copie, du type comportant une piste principale en spirale et au moins une piste secondaire imbriquée entre des spires de la piste principale et à un tel disque.

De nombreuses techniques ont été développées, en particulier ces dernières années, pour empêcher la copie illégale des disques optiques. Une des plus simples parmi celles-ci consiste à inscrire en un endroit prédéterminé du disque, lors de sa fabrication, un code de protection contre la copie. Cet endroit prédéterminé est tel que de nombreuses techniques de copie ne peuvent pas reproduire cet endroit du disque. Les lecteurs sont faits pour rejeter les disques n'ayant pas de code de protection au bon endroit. Mais il est évident que tout dispositif fait ou modifié pour lire toutes les données d'un disque peut copier le disque y compris son code de protection, et la copie illégale obtenue est exactement semblable au disque original.

D'autres techniques relativement sophistiquées ont été imaginées pour remédier aux problèmes de copie non autorisées. La plupart d'entre elles impliquent l'utilisation d'une « signature » ou empreinte spécifique sur le disque. Cela peut consister en une variation de certains paramètres de gravure sur le disque, tels que forme des marques (profondeur, largeur, longueur), introduction d'une asymétrie des marques, wobulation de la piste à des fréquences particulières, etc... Ces variations constituent la signature à rechercher et ne peuvent être reproduites par des graveurs usuels tels que les graveurs de CD-R. Cependant, il est nécessaire que les lecteurs de disque détectent ces variations et cela n'est généralement pas possible avec des lecteurs standards. Une variante de cette méthode permet de créer des mots de code ambigus susceptibles d'être lus avec des valeurs différentes lors de plusieurs lectures successives du disque avec des lecteurs standards.

Une technique différente consiste à détruire ou endommager volontairement des spires ou secteurs du disque original dont les adresses peuvent être cryptées pour constituer un code identficateur du disque inscrit sur celui-ci. Cependant un inconvénient de ce genre de technique est qu'elle nécessite d'authentifier l'utilisateur du disque par une information d'accès plus ou moins complexe que l'utilisateur devra introduire comme clé pour obtenir l'accès au contenu du disque. Cette information doit souvent être demandée à une station d'habilitation. Cette technique impose donc des contraintes non négligeables. Un autre inconvénient de telles méthodes de reconnaissance de parties endommagées est qu'elle ne permet de cacher qu'une faible quantité de données, donc susceptible d'être aisément incorporée dans le corps du logiciel. Un autre inconvénient est que l'écriture de telles marques est structurellement à la portée des graveurs de disques du commerce, le seul obstacle à la recopie des disques étant que le logiciel de commande de ces graveurs est inadapté à la gestion de telles marques, erreurs ou omissions. Une modification de l'un des logiciels de commande (au niveau du processeur utilisateur ou du logiciel interne du graveur) serait cependant insuffisante pour recopier ces disques. On peut noter ici que l'endommagement du disque peut à la limite consister en l'omission pure et simple de certains secteurs.

Pour essayer de remédier à certains de ces inconvénients et renforcer la sécurité des systèmes antipiratage à codes cachés, on a développé des techniques à spirale interrompue ou à zones séparées entre lesquelles les données sont réparties de façon à interdire un enregistrement en continue de données exécutables. De telles techniques peuvent toutefois entraîner une réduction de densité des informations sur le disque ou parfois l'utilisation de lecteurs non-standards.

Une voie paraissant plus prometteuse a été esquissée en prévoyant un disque comportant une spirale ou piste principale continue entre les tours de laquelle est intercalé un tronçon de spirale secondaire, l'écartement ou pas standard des pistes de disque optique conventionnel étant conservé. Une méthode d'authentification consiste alors à « reconnaître » la spirale secondaire seulement en vérifiant la présence de codes d'identification ou d'adresses spécifiques qui ne se retrouvent pas sur la piste principale. Cependant, cette technique ne met pas à profit de manière efficace l'intérêt majeur de disposer d'une zone qui n'est pas reproductible facilement par un graveur standard.

Les Demanderesses ont proposé récemment dans le document FR A 2 769 119 de remédier à ces inconvénients et de mettre à profit l'intérêt de l'existence d'une telle zone qui permet d'éliminer les copies classiques à l'aide de graveurs standard, grâce à la reconnaissance de la présence physique d'une zone de protection en deux parties.

Cette solution particulièrement intéressante prévoit un disque optique protégé contre la copie du type comportant une piste principale en spirale continue disposée sur toute la partie utile du disque et dont les secteurs ont des adresses ordonnées sensiblement séquentiellement le long de cette piste, et au moins une piste secondaire imbriquée entre des spires successives de la piste principale de manière que le pas des spires reste le même sur sensiblement l'ensemble du disque, des secteurs de la piste secondaire et les secteurs correspondants de la partie adjacente de la piste principale dans une direction radiale donnée portant les mêmes adresses de manière à former deux parties sensiblement de même taille d'une zone de protection.

Pour mettre en oeuvre le procédé de protection contre la copie avec un tel disque, il faut une lecture des deux parties de la zone de protection compatibles des lecteurs standards, en particulier la lecture de secteurs de même adresse sur la piste principale et la seconde secondaire ; ceci peut se faire en faisant réaliser par le lecteur un saut de piste. On rencontre alors une difficulté pour la lecture correcte du secteur correspondant sur la partie de piste associée, en particulier lorsque l'on obtient le saut par demande de lecture d'un secteur précédent le secteur actuellement lu. En effet, après le saut, certains lecteurs classiques ont besoin d'un certain temps, donc du passage sur un certain nombre de secteurs successifs, pour se re-régler (focalisation, acquisition d'une adresse lue, ...). D'autre part, si les secteurs de même adresse sur la piste principale et la piste secondaire sont en vis-à-vis, certains lecteurs peuvent être perturbés. Ces difficultés peuvent se traduire par le fait que des lecteurs recommenceront des sauts sans réussir à lire l'autre piste.

Pour remédier à cet inconvénient, on propose d'introduire dans la zone de protection un décalage de k secteurs entre les secteurs de même adresse des deux pistes, de manière que la quasi-totalité des lecteurs puisse, par des sauts successifs, lire avec succès une même adresse sur l'une et l'autre des deux pistes.

La fabrication d'un tel disque suppose de modifier les procédés connus de matriçage de manière à y incorporer les possibilités de réalisation de double spirale et de décalages prédéterminés entre les secteurs des deux pistes.

Selon un premier aspect de l'invention, il est donc prévu un procédé de matriçage d'un disque optique protégé contre la copie du type comportant une piste principale en spirale continue, disposée sur toute la partie utile du disque et dont les secteurs ont des adresses ordonnées sensiblement séquentiellement le long de cette piste, et au moins une piste secondaire imbriquée entre des spires successives de la piste principale de manière que le pas des spires reste le même sur sensiblement l'ensemble du disque, des secteurs de la piste secondaire et les secteurs correspondants de la partie adjacente de la piste principale dans une direction radiale donnée portant les mêmes adresses de manière à former deux parties sensiblement de même taille d'une zone de protection, dans lequel le matriçage s'effectue à l'aide d'une source de faisceau de gravure recevant les informations encodées pour gravure d'un dispositif formateur, ledit procédé étant caractérisé en ce qu'il comprend les étapes de :
- fournir les informations encodées à l'aide d'un formateur à deux sorties délivrant respectivement les informations à graver sur la piste principale et les informations à graver sur la piste secondaire;
- appliquer de manière continue les informations à graver sur la piste principale à ladite source ;
- commander, à un instant prédéterminé avant le début choisi de la partie utile de la piste secondaire, une accélération des déplacements de ladite source pour passer d'un pas de piste initial donné au pas double par l'intermédiaire d'une zone d'accélération;
- appliquer lesdites informations à graver sur la piste secondaire à ladite source avec un décalage de k secteurs par rapport à la gravure du secteur de début de la partie de la zone de protection sur la piste principale, où k est un nombre algébrique quelconque prédéterminé;
- commander, à un instant prédéterminé après la fin de la partie utile de la piste secondaire, une décélération des déplacements de ladite source pour passer dudit pas double audit pas initial par l'intermédiaire d'une zone de décélération.

Un des problèmes qui se pose lors des opérations de matriçage pour la fabrication d'un tel disque est que la commande d'une source de faisceau de gravure de deux pistes en parallèle ne permet pas de maîtriser de manière déterministe les adresses de début et fin de zone à deux pistes. On risque d'aboutir ainsi soit à des « trous » où la piste principale est à un pas double du pas de spirale standard sans que la piste secondaire soit présente (démarrage de celle-ci trop tardif ou fin de double pas de la piste principale survenant trop tard après la fin de la piste secondaire) soit à un écrasement des pistes entre elles si la piste secondaire démarre trop tôt ou si la piste principale revient à son pas standard trop tôt.

Pour remédier à cela, l'invention prévoit d'amorcer et prolonger la partie utile de la piste secondaire par des zones avec informations de remplissage sur lesquelles on peut jouer pour éviter « trous » et écrasement.

Cette introduction d'informations de remplissage nécessite, lors des opérations de matriçage, de se synchroniser sur la position effective des zones d'accélération et de décélération et, selon l'invention, la source de faisceau de gravure est donc conçue ou modifiée pour fournir des informations de synchronisationsur le début effectif des zones d'accélération et de décélération.

Selon un autre aspect de l'invention, il est prévu également un procédé de matriçage tel que ci-dessus, caractérisé en ce qu'il comprend en outre les étapes de :
- appliquer à ladite source des informations de remplissage de début pour gravure sur la piste secondaire jusqu'au début de sa partie utile, à partir de la fin d'un premier délai de temporisation prédéterminé après ladite information de synchronisation de début de zone d'accélération ;
- appliquer à ladite source des informations de remplissage de fin pour gravure sur la piste secondaire à partir de la fin de sa partie utile, jusqu'à la fin d'un second délai de temporisation prédéterminé après ladite information de synchronisation de début de zone de décélération.

L'invention a également pour objet un dispositif de matriçage qui met en oeuvre le procédé ci-dessus.

L'invention concerne aussi un disque optique protégé contre la copie du type comportant une piste principale en spirale continue, disposée sur toute la partie utile du disque et dont les secteurs ont des adresses ordonnées sensiblement séquentiellement le long de cette piste, et au moins une piste secondaire imbriquée entre des spires successives de la piste principale de manière que le pas des spires reste le même sur sensiblement l'ensemble du disque, des secteurs de la piste secondaire et les secteurs correspondants de la partie adjacente de la piste principale dans une direction radiale donnée portant les mêmes adresses de manière à former deux parties sensiblement de même taille d'une zone de protection, ledit disque étant caractérisé en ce que deux secteurs de même adresse dans la zone de protection sont décalés d'un intervalle de k secteurs mesuré le long de la piste principale, k étant un nombre algébrique quelconque prédéterminé.

Comme indiqué ci-dessus, il est préférable d'insérer des zones d'informations de remplissage en début et fin de piste secondaire.

L'invention prévoit donc aussi un disque tel que ci-dessus, dans lequel le passage de la zone de piste principale, avec pas de la spirale initial donné, au début de la zone de protection, avec pas de la piste principale double du pas initial, et le passage de la fin de cette zone de protection à la zone de piste principale à pas initial s'effectuent respectivement par une zone d'accélération et une zone de décélération, ledit disque étant caractérisé en ce que la partie utile de la piste secondaire est précédée et suivie d'informations de remplissage gravées débutant dans la zone d'accélération jusqu'au début de la partie utile d'une part et s'étendant, d'autre part, de la fin de la partie utile jusque dans la zone de décélération.

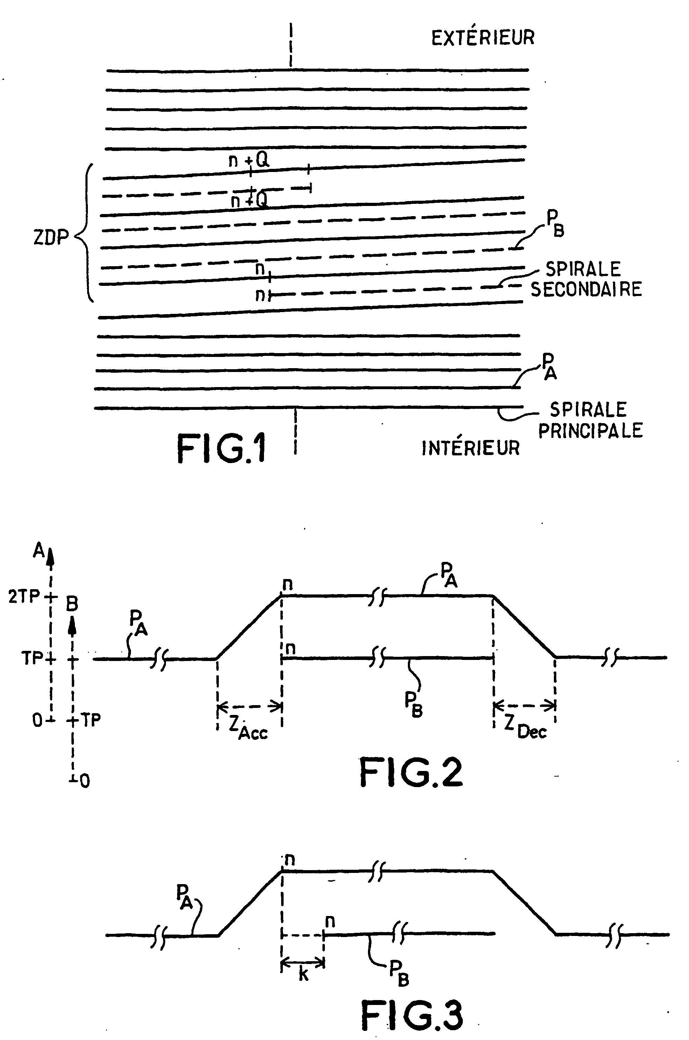

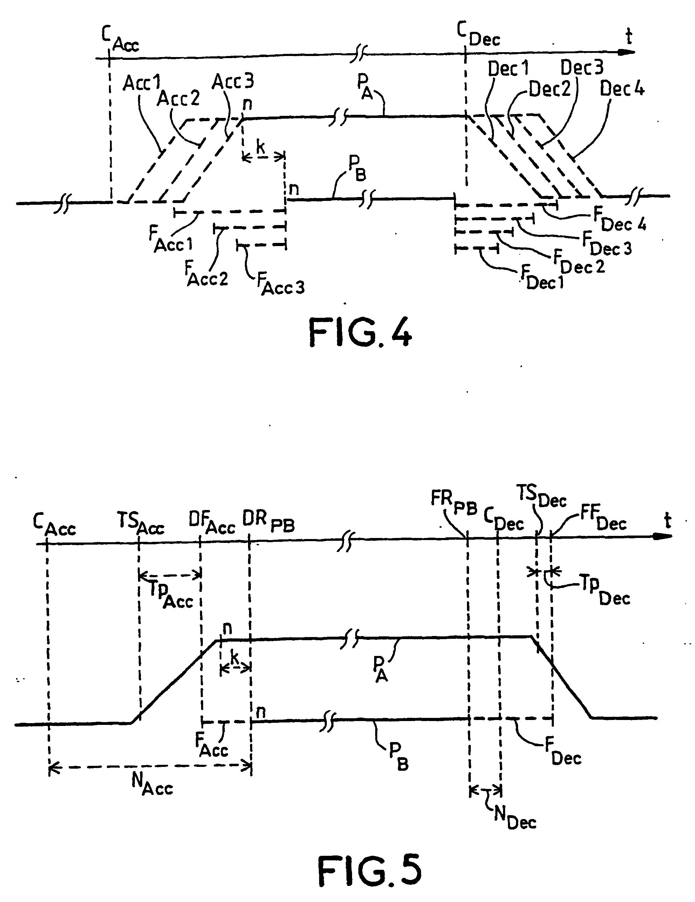

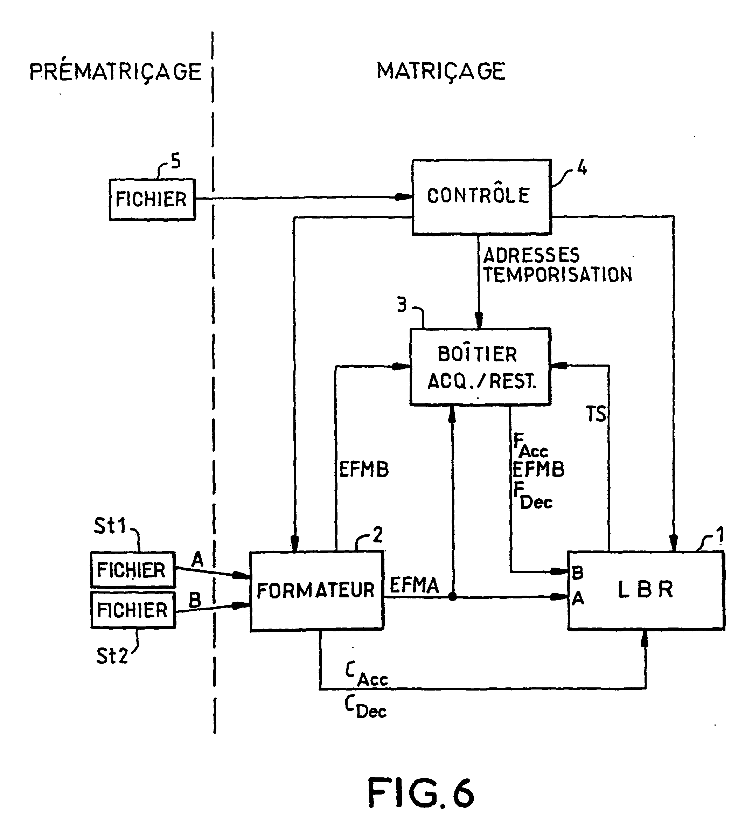

L'invention sera mieux comprise et d'autres caractéristiques et avantages apparaîtront à l'aide de la description ci-après et des dessins joints où :
◆ la figure 1 est une représentation sous forme linéaire des tours de spirale d'un disque protégé ;
◆ la figure 2 est une autre représentation linéaire d'un disque protégé à piste secondaire ;
◆ la figure 3 montre la représentation de la figure 2 modifiée selon un premier aspect de l'invention ;
◆ la figure 4 est une représentation illustrant un autre problème résolu par l'invention ;
◆ la figure 5 représente un chronogramme des opérations de matriçage selon l'invention ; et
◆ la figure 6 est un schéma par blocs d'un mode de réalisation d'un dispositif de matriçage selon l'invention.

Sur la figure 1 est représentée une forme préférentielle de disque protégé, dans laquelle chaque spire (ou tour) d'une piste en spirale est représentée par un segment allant de l'extrémité gauche à l'extrémité droite de la figure. De même, on a indiqué l'intérieur du disque vers le bas de la figure, où commence une piste en spirale principale P_{A}, et l'extérieur du disque où finit cette piste.

La piste principale P_{A} est une piste en spirale continue disposée sur toute la partie utile du disque et dont les secteurs ont, de manière classique, des adresses ordonnées sensiblement séquentiellement le long de cette piste. Une piste secondaire P_{B} est intercalée entre des spires successives de la piste principale, de manière que le pas de la piste reste, sensiblement dans toutes les zones du disque, constant et égal au pas standard habituellement utilisé dans les disques optiques classiques, tels que les disques CD- ou DVD-ROM. On appelle « zone de protection » ZDP la zone en deux parties où coexistent les deux pistes et où les mêmes adresses n à n+Q sont utilisées sur les deux pistes. Cette zone comprend des informations issues d'un fichier de protection et réparties entre les pistes principale et secondaire. Un élément essentiel de la protection est la reconnaissance de la structure physique du disque original à deux pistes qui le différencie d'une copie à une seule piste et est basé sur la lecture avec succès par un lecteur standard des informations présentes aux mêmes adresses sur la piste principale et la piste secondaire, grâce à une série de lectures dans des conditions différentes et/ou à la recherche sur la piste associée d'un secteur de même adresse que le secteur lu sur une première piste.

La figure 2 représente le disque de la figure 1 sous une autre forme schématique où la double spirale est représentée linéairement. Le disque comporte d'abord une spirale principale continue P_{A}. Si l'on considère que l'on part de l'intérieur du disque, à gauche de la figure, on trouve d'abord la spirale P_{A} seule, avec un pas TP (échelle A à gauche) qui est un pas normalisé, par exemple 1,6 µm pour les disques CD-ROM. Puis le pas augmente progressivement dans une zone Z_{Acc}, appelée zone d'accélération pour des raisons qui se préciseront ultérieurement, jusqu'à atteindre un pas double 2TP. La spirale P_{A} continue avec ce pas 2TP dans la zone de protection où elle coexiste avec la piste secondaire P_{B} imbriquée entre ses tours et ayant aussi un pas 2TR (échelle B à gauche de la figure). Cette zone de protection à deux pistes est suivie d'une zone Z_{Dec}, appelée zone de décélération, où le pas de la spirale P_{A} décroît progressivement jusqu'à revenir à la valeur normalisée TP. La spirale P_{A} continue alors seule avec ce pas TP jusqu'à la fin de la partie utile du disque. Comme on le voit sur cette figure 2, les secteurs d'adresse n sur les pistes P_{A} et P_{B} sont théoriquement disposés en vis-à-vis.

Cependant, comme on en a fait état plus haut, certains lecteurs standard ont, lorsqu'ils font un saut de piste, besoin d'un certain temps (variable d'un lecteur à un autre) pour se re-régler et lire efficacement les informations gravées sur la piste atteinte. De plus, des adresses identiques sur les secteurs adjacents des pistes P_{A} et P_{B} perturbent les lecteurs car, en cas de saut, ils ont « l'impression de faire du sur-place ».

Pour remédier à cela, on utilise une première caractéristique de l'invention schématisée sur la figure 3. On prévoit un intervalle de décalage de k secteurs entre les secteurs de même adresse (n par exemple) sur la piste principale et la piste secondaire. On considère ici à titre d'exemple le cas où la piste secondaire est à « l'intérieur du disque » par rapport à la piste principale, c'est-à-dire qu'un secteur d'adresse n de la piste secondaire qui, en théorie, se trouverait face à un secteur d'adresse n de la piste principale, se trouve en face du secteur d'adresse n+k de la piste principale et vers l'intérieur du disque dans la direction radiale par rapport à ce secteur n+k. Cette disposition est particulièrement nécessaire si l'on adopte, comme stratégie de saut d'une spirale à l'autre, une recherche par saut arrière d'un secteur. Pour l'optimisation du système, il est souhaitable que le nombre k de secteurs de décalage corresponde approximativement au contenu d'un demi-tour de spirale. Comme, dans le cas usuel où le disque est lu à vitesse linéaire constante (CLV), un tour de spirale contient davantage de secteurs vers l'extérieur du disque que vers l'intérieur, on peut en déduire que les lecteurs disposent de davantage de temps pour se re-régler lorsque la piste secondaire est déplacée vers l'extérieur du disque. Naturellement, l'invention s'applique également lorsque la piste secondaire est « à l'extérieur du disque » par rapport à la piste principale et/ou lorsque le décalage k est en sens inverse ; c'est-à-dire que le décalage k est en fait un nombre réel quelconque prédéterminé.

Ceci étant, on doit aussi tenir compte, pour la bonne lecture de la double spirale, d'un phénomène qui se produit normalement lors des opérations de matriçage. Les informations à graver sur la matrice (en général en verre) sont appliquées à une source de faisceau de gravure par un dispositif formateur qui encode les données selon le code EFM pour les disques CD (EFM : initiales de « Eigth to Fourteen Modulation »). Dans le cas présent, il faut disposer d'une source capable de graver deux pistes en parallèle. On peut par exemple utiliser comme source un LBR double faisceau (LBR : Laser Beam Recorder). Un tel LBR possède deux entrées de modulation correspondant respectivement aux deux faisceaux couplés. Les deux faisceaux se déplacent radialement par rapport à la matrice à graver qui tourne à vitesse constante. Normalement, la vitesse de déplacement radial des faisceaux est constante de manière à assurer le suivi d'une (ou deux) spirale à pas initial donné constant. Ce pas peut être un pas normalisé (1,6 µm par exemple pour les CD-ROM selon la norme ISO/IEC 10149). Cependant, il est possible de commander les asservissements du LBR par une entrée de commande pour accélérer ou ralentir le déplacement radial des faisceaux de manière à changer le pas des spirales.

A partir d'un tel LBR, les expériences de réalisation de double spirale ont montré une variabilité de la prise en compte des commandes de changement de pas à l'accélération ou à la décélération, ce qui perturbe la précision de réalisation des entrée et sortie de la zone à double spirale. Le délai de prise en compte par le LBR d'une commande de changement de pas est variable d'une machine à une autre et/ou d'une matrice à une autre. En conséquence, on peut être confronté soit à une zone sans pits (ou « trou ») si la commande est traitée par le LBR plus rapidement que prévu en accélération ou plus lentement en décélération, soit à une zone d'écrasement des pistes entre elles dans les cas contraires.

Pour remédier à cela, il faut lancer la commande d'accélération plusieurs secteurs avant le moment où l'accélération est désirée. Mais cela se traduit généralement par un « trou », c'est-à-dire un ou plusieurs tours de spirale principale au pas double sans spirale secondaire. De même, en fin de spirale secondaire, si un délai notable apparaît dans la prise en compte de la commande de décélération, on va avoir également un « trou » sans spirale secondaire avant le retour de la spirale principale au pas normalisé TP. Et il n'est pas possible d'anticiper en lançant la commande de décélération un peu avant la fin de la spirale secondaire car, en cas d'exécution rapide, on risque l'écrasement de la fin de la piste secondaire.

La figure 4 rend compte schématiquement de ces phénomènes. Ainsi, à titre d'exemple, on voit que, pour une même commande d'accélération C_{Acc}, on a représenté trois réalisations possibles d'accélération Acc1 à Acc3 suivant les temps de réaction du LBR. De même, la figure 4 montre, à titre d'exemple, quatre réalisations possibles de décélération Dec1 à Dec4 pour une même commande de décélération C_{Dec}.

Les conséquences de ces phénomènes sont des perturbations notables de la lecture par des lecteurs standards. Si on a des « trous » trop importants, dans le cas de lecteurs perfectionnés qui corrèlent le nombre de pistes sautées et le déplacement radial effectif de la tête optique, l'asservissement de la tête détecte des incohérences lors de sauts dans une zone de « trou », ce qui peut provoquer des problèmes de temps d'accès.

De même, une zone d'écrasement des pistes va perturber les lecteurs.

Une solution pourrait être d'adapter la longueur de la spirale secondaire, donc la quantité d'informations à graver pour qu'elle s'insère exactement dans l'espace réellement créé pour elle.

Une autre solution a été trouvée selon l'invention. Comme représenté sur la figure 4, on prévoit d'utiliser des informations de remplissage, en principe sans signification utile, pour amorcer et prolonger la piste secondaire P_{B} de manière à combler l'espace vide (les « trous ») avant et après la partie utile de P_{B}. Ainsi, suivant la position de la zone d'accélération effectivement obtenue, on utilisera les remplissages F_{Acc1} à F_{Acc3}. De même, en fin de piste secondaire, on ajoutera l'un des remplissages F_{Dec1} à F_{Dec4}.

Pratiquement, pour choisir la bonne durée des remplissages, comme l'on ne maîtrise pas de façon déterministe la position exacte des zones d'accélération et de décélération, il faut obtenir du LBR lui-même l'information de prise en compte effective des commandes d'accélération C_{Acc} et de décélération C_{Dec}. Le LBR est conçu ou modifié pour fournir une information de synchronisation TS_{Acc}, TS_{Dec} apparaissant dès la prise en compte de la commande, respectivement C_{Acc}, C_{Dec}.

Cela étant, la figure 5 illustre un chronogramme des opérations de matriçage d'une matrice à double spirale. Si l'on appelle DR_{PB} l'instant où on doit commencer la gravure de la piste P_{B}, on lance la commande d'accélération suffisamment tôt pour couvrir tous les temps de réaction possibles, par exemple N_{Acc} secteurs avant l'instant DR_{PB}. Lorsque le LBR démarre l'accélération, il fournit une information de synchronisation TS_{Acc}. A partir de cet instant, une temporisation prédéterminée Tp_{Acc} va déclencher le début DF_{Acc} des informations de remplissage F_{Acc}. Par ailleurs, le début de piste secondaire DR_{PB} correspondant au secteur d'adresse n a été fixé k secteurs après l'apparition du secteur d'adresse n sur la piste principale P_{A}.

De même, en fin de zone de protection, la commande de décélération C_{Dec} est lancée N_{Dec} secteurs après la fin FR_{PB} de la piste secondaire P_{B}. D'autre part, les informations de remplissage F_{Dec} sont fournies au LBR dès la fin FR_{PB} de la piste P_{B}. Lorsque le LBR déclenche la décélération, il fournit une information de synchronisation TS_{Dec}. A partir de cet instant, une temporisation prédéterminée Tp_{Dec} va déclencher la fin FF_{Dec} de la zone de remplissage F_{Dec}.

La figure 6 est un schéma d'un dispositif de matriçage mettant en oeuvre le procédé ci-dessus. On a séparé par un pointillé vertical la partie matriçage de ce qui est obtenu lors des opérations de prématriçage.

Les informations A et B à graver respectivement sur les pistes P_{A} et P_{B}, obtenues lors du prématriçage, sont transférées à partir de fichiers dans des moyens de stockage St1 et St2 (représentés séparés pour la clarté de la description) au dispositif formateur 2 qui les encode en code EFM et fournit les signaux de gravure EFMA pour la piste principale P_{A} et EFMB pour la piste secondaire P_{B}. Les signaux EFMA sont appliqués sur l'entrée A de modulation du faisceau de piste principale du LBR, 1. D'autre part, le formateur 2 fournit des signaux de commande d'accélération C_{Acc} et de décélération C_{Dec} à une entrée de commande du LBR. Les informations de synchronisation TS_{Acc} de début effectif d'accélération et TS_{Dec} de début effectif de décélération sont disponibles sur une sortie du LBR.

Il est prévu en outre un boîtier d'acquisition/restitution 3. Celui-ci reçoit du formateur 2 les signaux EFMB, ainsi que les signaux EFMA appliqués au LBR. II reçoit aussi les informations de synchronisation TS (TS_{Acc}, TS_{Dec}) venant du LBR 1.

Ce boîtier fournit les signaux appliqués sur l'entrée de modulation B du faisceau de piste secondaire. Enfin, le boîtier 3 reçoit divers paramètres d'un circuit de contrôle 4 qui reçoit des informations d'un fichier 5 obtenu lors du prématriçage et, d'autre part, calcule éventuellement des informations et/ou paramètres sur place. Ce circuit 4 constitue aussi le poste de contrôle du LBR et du formateur.

Le fonctionnement est le suivant. Lors d'une première phase d'acquisition, les informations EFMB à graver sur la piste secondaire P_{B} encodées par le formateur 2 sont envoyées par celui-ci au boîtier 3 qui les met en mémoire dans des moyens de stockage. Par ailleurs, la position et la longueur de la partie utile de la piste secondaire qui ont été déterminées lors de la création de la protection et mises dans le fichier 5 sont envoyées au circuit de contrôle 4. Celui-ci dispose des, ou reçoit les, paramètres de temporisation adaptés au matriçage à effectuer.

La phase de restitution (appelée ainsi du fait que le boîtier 3 restitue pour la gravure notamment les signaux EFMB stockés) comprend l'envoi en continu au LBR par le formateur 2 des signaux EFMA, puis l'envoi du signal de commande d'accélération C_{Acc}. Lorsque le signal TS_{Acc} est délivré par le LBR au boîtier 3, celui-ci, après le délai de temporisation Tp_{Acc} qui lui est fourni par le circuit de contrôle 4, commence à envoyer des informations de remplissage sur l'entrée B du LBR. Ces informations peuvent être générées par le boîtier 3 ou, de préférence, être constituées par les signaux EFMA eux-mêmes qu'il reçoit du formateur.

Le boîtier 3 reçoit également du circuit de contrôle 4 l'adresse (déterminée sur la piste principale) de début DR_{PB} de piste secondaire obtenue à partir de la position de cette piste et du décalage k à effectuer. Dès que cette adresse est détectée sur le signal EFMA par le boîtier 3, celui-ci remplace le remplissage F_{Acc} par les signaux EFMB qu'il a stockés.

En fin de gravure de piste secondaire, des étapes similaires se déroulent A l'adresse de fin de restitution FR_{PB}, fournie par le circuit 4, le boîtier 3 remplace les signaux EFMB par des informations de remplissage sur l'entrée B du LBR. Le signal de commande de décélération C_{Dec} est envoyé au LBR avec un décalage de N_{Dec} secteurs par rapport à FR_{PB}. Lorsque le boîtier 3 reçoit l'information de synchronisation TS_{Dec} de début effectif de décélération venant du LBR, après une temporisation Tp_{Dec} fixée par le circuit de contrôle 4, le boîtier 3 cesse d'envoyer tout signal au LBR, ce qui correspond à la fin FF_{Dec} du remplissage de fin F_{Dec}.

Bien entendu, les exemples de réalisation décrits ne sont nullement limitatifs de l'invention. Notamment, toutes les opérations spécifiques à l'invention, au lieu d'être réalisées au sein d'un boîtier séparé, pourraient fort bien être intégrées par exemple au sein du formateur ou aussi à l'unité de traitement (CPU) du LBR. D'autre part, la source de faisceau de gravure, au lieu d'un LBR double faisceau, pourrait être toute source de faisceau capable de graver deux pistes en parallèle, simultanément ou séquentiellement. De même, bien qu'on ait décrit un exemple de réalisation où les informations sont encodées en deux phases, une phase d'acquisition, pendant laquelle les informations à graver sur la piste secondaire sont encodées par le formateur et stockées en mémoire, et une phase de restitution, pendant laquelle, lors de la gravure des informations dans la zone de protection, les informations stockées sont restituées à la source de faisceau de gravure pour être gravées sur la piste secondaire, on peut aussi de préférence dans un second temps imaginer d'encoder les informations à graver « au vol » (en temps réel) pendant les opérations de gravure effectives des pistes principale et secondaire par la source. Les informations encodées à graver sont alors fournies au fur et à mesure par le formateur à deux sorties.

## Revendications

1. Procédé de matriçage d'un disque optique protégé contre la copie du type comportant une piste principale (PA) en spirale continue, disposée sur toute la partie utile du disque et au moins une piste secondaire (PB) imbriquée entre des spires successives de la piste principale de manière que le pas des spires reste le même sur sensiblement l'ensemble du disque, des secteurs de la piste secondaire et les secteurs correspondants de la partie adjacente de la piste principale dans une direction radiale donnée portant les mêmes adresses (n à n+Q) de manière à former deux parties sensiblement de même taille d'une zone de protection (ZDP), dans lequel le matriçage s'effectue à l'aide d'une source de faisceau de gravure, ledit procédé étant **caractérisé en ce que** les secteurs de la piste principale ont des adresses ordonnées sensiblement séquentiellement le long de cette piste, la source de faisceau de gravure reçoit les informations encodées pour gravure d'un dispositif formateur et **en ce qu'**il comprend les étapes de :
fournir les informations encodées à l'aide d'un formateur à deux sorties délivrant respectivement les informations (EFMA) à graver sur la piste principale (PA) et les informations (EFMB) à graver sur la piste secondaire (PB) ;
appliquer de manière continue les informations à graver sur la piste principale (PA) à ladite source ;
commander, à un instant prédéterminé (CAcc) avant le début choisi (DRPB) de la partie utile de la piste secondaire, une accélération des déplacements de ladite source pour passer d'un pas de piste initial donné au pas double par l'intermédiaire d'une zone d'accélération (ZAcc) ;
appliquer lesdites informations à graver sur la piste secondaire à ladite source avec un décalage de k secteurs par rapport à la gravure du secteur de début de la partie de la zone de protection sur la piste principale (PA), où k est un nombre algébrique quelconque prédéterminé ;
commander, à un instant prédéterminé (CDec) après la fin (FRPB) de la partie utile de la piste secondaire, une décélération des déplacements de ladite source pour passer dudit pas double audit pas initial par l'intermédiaire d'une zone de décélération (ZDec).

2. Procédé de matriçage selon la revendication 1, **caractérisé en ce que**, dans une première phase d'acquisition, on encode et on stocke en mémoire les informations (EFMB) à graver sur la piste secondaire (PB).

3. Procédé de matriçage selon l'une des revendications 1 ou 2, **caractérisé en ce que** ladite source de faisceau de gravure (1) est conçue pour fournir des informations de synchronisation sur le début (TSAcc ; TSDec) effectif des zones d'accélération et de décélération.

4. Procédé de matriçage selon la revendication 3, **caractérisé en ce qu'**il comprend en outre les étapes de :
appliquer à ladite source des informations de remplissage de début (FAcc) pour gravure sur la piste secondaire jusqu'au début de sa partie utile, à partir de la fin d'un premier délai de temporisation prédéterminé (TpAcc) après ladite information de synchronisation (TSAcc) de début de zone d'accélération ;
appliquer à ladite source des informations de remplissage de fin (FDec) pour gravure sur la piste secondaire à partir de la fin de sa partie utile, jusqu'à la fin d'un second délai de temporisation prédéterminé (TpDec) après ladite information de synchronisation (TSDec) de début de zone de décélération.

5. Procédé de matriçage selon la revendication 4, **caractérisé en ce que** lesdits premier et second délais de temporisation (TpAcc ; TpDec) sont choisis pour que la gravure des informations de remplissage de début commence à l'intérieur de la zone d'accélération et que la gravure des informations de remplissage de fin se termine à l'intérieur de la zone de décélération.

6. Dispositif de matriçage pour la mise en oeuvre du procédé selon l'une quelconque des revendications 1 à 5, du type comportant une source de faisceau de gravure (1) capable de graver deux pistes en parallèle, ledit dispositif de matriçage étant **caractérisé en ce que** la source de faisceau de gravure est capable de passer d'une zone de gravure avec pas de piste initial donné à une zone à pas double et vice versa par accélération, respectivement décélération, des déplacements du faisceau en réponse à des signaux de commande d'accélération (CAcc), respectivement de décélération (CDec), qui lui sont appliqués, **en ce que** ladite source est prévue pour fournir des signaux de synchronisation sur le début (TSAcc ; TSDec) effectif des zones d'accélération et de décélération gravées, et **en ce qu'**il comprend en outre :
un dispositif formateur (2) qui encode les informations à graver pour les appliquer à ladite source,
des moyens de stockage (3) pour l'acquisition préalable des informations encodées (EFMB) par ledit dispositif formateur (2) à graver sur la piste secondaire (PB) ;
des moyens de restitution (3) pour fournir à ladite source (1) les informations à graver sur la piste secondaire incluant lesdites informations encodées stockées par lesdits moyens de stockage ;
des moyens de gestion (3) pour commander ladite restitution par les moyens de restitution, à partir des informations encodées (EFMA) fournies par le dispositif formateur à ladite source pour gravure sur la piste principale (PA) et desdits signaux de synchronisation reçus de ladite source ;
des moyens de contrôle (4) pour fournir auxdits moyens de gestion, à ladite source et au dispositif formateur des informations de contrôle.

7. Dispositif selon la revendication 6, **caractérisé en ce que** lesdits moyens de restitution (3) sont prévus pour générer et fournir des informations de remplissage (FAcc, DDec) avant et après lesdites informations encodées stockées (EFMB), **en ce que** lesdits moyens de gestion sont prévus pour commander les moyens de restitution à partir des informations encodées (EFMA) de la piste principale, des signaux de synchronisation venant de ladite source et des informations de contrôle venant des moyens de contrôle et incluant les adresses de début et fin de la partie utile de la piste secondaire, de position de celle-ci et de délais de temporisation pour la commande de début d'informations de remplissage de début et de fin d'informations de remplissage de fin.

8. Dispositif selon la revendication 7, **caractérisé en ce que** lesdits moyens de contrôle (4) reçoivent des informations de longueur et de position de partie utile de la piste secondaire à partir d'un fichier généré lors des opérations de prématriçage et des informations de décalage (k), de délais de temporisation et d'adresses, pour élaborer les informations de contrôle envoyées audits moyens de gestion, à ladite source et au dispositif formateur.

9. Dispositif selon l'une des revendications 6 à 8, **caractérisé en ce que** lesdits moyens de restitution sont prévus pour fournir comme informations de remplissage des informations encodées (EFMA) fournies pour gravure sur la piste principale par ledit dispositif formateur (2).

10. Disque optique protégé contre la copie du type comportant une piste principale (PA) en spirale continue, disposée sur toute la partie utile du disque et au moins une piste secondaire (PB) imbriquée entre des spires successives de la piste principale de manière que le pas des spires reste le même sur sensiblement l'ensemble du disque, des secteurs de la piste secondaire et les secteurs correspondants de la partie adjacente de la piste principale dans une direction radiale donnée portant les mêmes adresses (n à n+Q) de manière à former deux parties sensiblement de même taille d'une zone de protection (ZDP), ledit disque étant **caractérisé en ce que** les secteurs de la piste principale ont des adresses ordonnées sensiblement séquentiellement le long de cette piste, et **en ce que** deux secteurs de même adresse dans la zone de protection sont décalés d'un intervalle de k secteurs mesuré le long de la piste principale, k étant un nombre algébrique quelconque prédéterminé.

11. Disque selon la revendication 10, dans lequel le passage de la zone de piste principale (PA), avec pas de la spirale (SP) initial donné, au début de la zone de protection (ZDP), avec pas de la piste principale double du pas initial, et le passage de la fin de cette zone de protection à la zone de piste principale à pas initial s'effectuent respectivement par une zone d'accélération (ZAcc) et une zone de décélération (ZDec), ledit disque étant **caractérisé en ce que** la partie utile de la piste secondaire (PB) est précédée et suivie d'informations de remplissage (FAcc, FDec) gravées débutant dans la zone d'accélération jusqu'au début de la partie utile d'une part et s'étendant, d'autre part, de la fin de la partie utile jusque dans la zone de décélération.

12. Disque selon l'une des revendications 10 ou 11, **caractérisé en ce que** ledit intervalle de k secteurs est choisi de manière à correspondre sensiblement à un demi-tour de spirale dans la zone considérée.

13. Disque selon l'une quelconque des revendications 10 à 12, **caractérisé en ce que** les pistes principale et secondaire sont disposées sur le disque de telle sorte qu'un secteur d'adresse donnée n sur la piste secondaire se trouve sensiblement en vis-à-vis du secteur d'adresse (n+k) sur la piste principale.

## Patentansprüche

1. Verfahren zum Pressen einer kopiergeschützten optischen Platte, vom Typ umfassend eine Hauptspur (PA) in fortlaufender Spirale, die auf dem gesamten nützlichen Abschnitt der Platte angeordnet ist, und mindestens eine zweite Spur (PB), die zwischen aufeinanderfolgenden Spiralen der Hauptspur derart eingefügt ist, dass die Ganghöhe der Spiralen im Wesentlichen auf der gesamten Platte gleich bleibt, wobei Sektoren der zweiten Spur und die entsprechenden Sektoren des benachbarten Abschnitts der Hauptspur in einer bestimmten radialen Richtung dieselben Adressen (n bis n+Q) tragen, so dass zwei im Wesentlichen gleich große Abschnitte einer Schutzzone (ZDP) gebildet werden, in der das Pressen mit Hilfe einer Gravurstrahlquelle erfolgt, wobei das Verfahren **dadurch gekennzeichnet ist, dass** die Sektoren der Hauptspur Adressen aufweisen, die im Wesentlichen sequentiell entlang dieser Spur angeordnet sind, wobei die Gravurstrahlquelle codierte Informationen für das Gravieren einer Formervorrichtung empfängt und dadurch, dass das Verfahren folgende Schritte umfasst:
Versorgen von zwei Ausgängen, welche die auf der Hauptspur (PA) zu gravierenden Informationen (EFMA) bzw. die auf der zweiten Spur (PB) zu gravierenden Informationen (EFMB) liefern, mit den codierten Informationen mittels eines Formers;
fortlaufendes Anwenden der auf der Hauptspur (PA) zu gravierenden Informationen auf die Quelle;
zu einem vorbestimmten Zeitpunkt (CAcc) vor dem ausgewählten Anfang (DRPB) des nützlichen Abschnitts der zweiten Spur Steuern einer Beschleunigung der Verschiebungen der Quelle, um von einer bestimmten anfänglichen Ganghöhe der Spur mittels einer Beschleunigungszone (ZAcc) zur doppelten Ganghöhe überzugehen;
Anwenden der auf die zweite Spur zu gravierenden Informationen auf die Quelle mit einer Versetzung von k Sektoren in Bezug auf die Gravur des Anfangsektors des Abschnitts der Schutzzone auf der Hauptspur (PA), wobei k eine beliebige vorbestimmte algebraische Zahl ist;
zu einem vorbestimmten Zeitpunkt (CDec) nach dem Ende (FRPB) des nützlichen Abschnitts der zweiten Spur eine Verlangsamung der Verschiebungen der Quelle steuern, um von der doppelten Ganghöhe mittels einer Verlangsamungszone (ZDec) zur anfänglichen Ganghöhe überzugehen.

2. Verfahren zum Pressen nach Anspruch 1, **dadurch gekennzeichnet, dass** in einer ersten Erfassungsphase die auf der zweiten Spur (PB) zu gravierenden Informationen (EFMB) codiert und gespeichert werden.

3. Verfahren zum Pressen nach einem der Ansprüche 1 oder 2, **dadurch gekennzeichnet, dass** die Gravurstrahlquelle (1) gestaltet ist, um beim effektiven Anfang (TSAcc; TSDec) der Beschleunigungs- und der Verlangsamungszone Synchronisationsinformationen bereitzustellen.

4. Verfahren zum Pressen nach Anspruch 3, **dadurch gekennzeichnet, dass** es ferner folgende Schritte umfasst:
Anwenden von Anfangsfüllinformationen (FAcc) für das Gravieren auf der zweiten Spur auf die Quelle bis zum Anfang ihres nützlichen Abschnitts, ausgehend vom Ende einer ersten vorbestimmten Verzögerungszeit (TpAcc) nach der Synchronisationsinformation (TSAcc) des Anfangs der Beschleunigungszone;
Anwenden von Endfüllinformationen (FDec) für das Gravieren auf der zweiten Spur auf die Quelle ausgehend vom Ende ihres nützlichen Abschnitts bis zum Ende einer zweiten vorbestimmten Verzögerungszeit (TpDec), nach der Synchronisationsinformation (TSDec) des Anfangs der Verlangsamungszone.

5. Verfahren zum Pressen nach Anspruch 4, **dadurch gekennzeichnet, dass** die erste und die zweite Verzögerungszeit (TpAcc; TpDec) ausgewählt werden, damit das Gravieren der Anfangsfüllinformationen im Inneren der Beschleunigungszone beginnt und das Gravieren der Endfüllinformationen im Inneren der Verlangsamungszone endet.

6. Vorrichtung zum Pressen für das Umsetzen des Verfahrens nach einem der Ansprüche 1 bis 5, vom Typ umfassend eine Gravurstrahlquelle (1), die zwei Spuren parallel gravieren kann, wobei die Pressvorrichtung **dadurch gekennzeichnet ist, dass** die Gravurstrahlquelle von einer Gravurzone mit einer bestimmten anfänglichen Spurganghöhe zu einer Zone mit doppelter Ganghöhe und umgekehrt durch Beschleunigung bzw. Verlangsamung übergehen kann, Verschiebungen des Strahls als Reaktion auf Beschleunigungssteuersignale (CAcc) bzw. Verlangsamungssteuersignale (CDec), die darauf angewendet werden, dadurch, dass die Quelle dazu vorgesehen ist, am effektiven Beginn (TSAcc; TSDec) der gravierten Beschleunigungs- und Verlangsamungszonen Synchronisationssignale bereitzustellen und dadurch, dass sie weiterhin Folgendes umfasst:
eine Formervorrichtung (2), welche die zu gravierenden Informationen codiert, um sie auf die Quelle anzuwenden,
Speichermittel (3) für das vorhergehende Erfassen der auf die zweite Spur (PB) zu gravierenden codierten Informationen (EFMB) durch die Formervorrichtung (2);
Wiedergabemittel (3), um die auf die zweite Spur zu gravierenden Informationen an die Quelle (1) zu liefern, einschließlich der codierten von den Speichermitteln gespeicherten Informationen;
Verwaltungsmittel (3), um die Wiedergabe durch die Wiedergabemittel ausgehend von den codierten Informationen (EFMA), die von der Formervorrichtung an die Quelle zum Gravieren auf die Hauptspur (PA) geliefert werden, und der von der Quelle empfangenen Synchronisationssignale zu steuern;
Regelungsmittel (4), um an die Verwaltungsmittel, die Quelle und die Formervorrichtung Regelungsinformationen zu liefern.

7. Vorrichtung nach Anspruch 6, **dadurch gekennzeichnet, dass** die Wiedergabemittel (3) vorgesehen sind, um Füllinformationen (FAcc, DDec) vor und nach den codierten gespeicherten Informationen (EFMB) zu erzeugen und zu liefern, dadurch, dass die Verwaltungsmittel vorgesehen sind, um die Wiedergabemittel ausgehend von den codierten Informationen (EFMA) der Hauptspur, der Synchronisationsdaten, die von der Quelle kommen, und den Regelungsinformationen, die von den Regelungsmitteln kommen und die Anfangs- und Endadressen des nützlichen Abschnitts der zweiten Spur, der Position von dieser und der Verzögerungszeit für die Anfangssteuerung von Anfangsfüllinformationen und die Endsteuerung von Endfüllinformationen enthalten, zu steuern.

8. Vorrichtung nach Anspruch 7, **dadurch gekennzeichnet, dass** die Regelungsmittel (4) Informationen über die Länge und die Position des nützlichen Abschnitts der zweiten Spur ausgehend von einer Datei erhalten, die während der Arbeitsschritte des Vorpressens erzeugt wird, und Informationen über das Versetzen (k), über die Verzögerungszeit und über Adressen, um die Regelungsinformationen zu erstellen, die an die Verwaltungsmittel, die Quelle und die Formervorrichtung gesendet werden.

9. Vorrichtung nach einem der Ansprüche 6 bis 8, **dadurch gekennzeichnet, dass** die Wiedergabemittel vorgesehen sind, um als Füllinformationen codierte Informationen (EFMA) zu liefern, die für das Gravieren auf der Hauptspur durch die Formervorrichtung (2) geliefert werden.

10. Kopiergeschützte optische Platte vom Typ umfassend eine Hauptspur (PA) in fortlaufender Spirale, die auf dem gesamten nützlichen Abschnitt der Platte angeordnet ist, und mindestens eine zweite Spur (PB), die zwischen den aufeinanderfolgenden Spiralen der Hauptspur derart eingefügt ist, dass die Ganghöhe der Spiralen im Wesentlichen auf der gesamten Platte gleich bleibt, wobei Sektoren der zweiten Spur und die entsprechenden Sektoren des benachbarten Abschnitts der Hauptspur in einer bestimmten radialen Richtung dieselben Adressen (n bis n+Q) tragen, so dass zwei im Wesentlichen gleich große Abschnitte einer Schutzzone (ZDP) gebildet werden, wobei die Platte **dadurch gekennzeichnet ist, dass** die Sektoren der Hauptspur im Wesentlichen entlang dieser Spur sequentiell angeordnete Adressen aufweisen und dadurch, dass zwei Sektoren derselben Adresse in der Schutzzone um einen Abstand von k Sektoren versetzt sind, der entlang der Hauptspur gemessen wird, wobei k eine beliebige vorbestimmte algebraische Zahl ist.

11. Platte nach Anspruch 10, in welcher der Übergang von der Zone der Hauptspur (PA), mit bestimmter anfänglicher Ganghöhe der Spirale (SP), zum Beginn der Schutzzone (ZDP), mit Ganghöhe der Hauptspur, die das Doppelte der anfänglichen Ganghöhe ausmacht, und der Übergang vom Ende dieser Schutzzone zur Zone der Hauptspur mit anfänglicher Ganghöhe über eine Beschleunigungszone (ZAcc) bzw. eine Verlangsamungszone (ZDec) erfolgt, wobei die Platte **dadurch gekennzeichnet ist, dass** vor und nach dem nützlichen Abschnitt der zweiten Spur (PB) gravierte Füllinformationen (FAcc, FDec) vorhanden sind, die einerseits in der Beschleunigungszone bis zum Anfang des nützlichen Abschnitts beginnen und andererseits sich von dem Ende des nützlichen Abschnitts bis in die Verlangsamungszone erstrecken.

12. Platte nach einem der Ansprüche 10 oder 11, **dadurch gekennzeichnet, dass** der Abstand von k Sektoren derart ausgewählt ist, dass er im Wesentlichen einer halben Drehung der Spirale in der betreffenden Zone entspricht.

13. Platte nach einem der Ansprüche 10 bis 12, **dadurch gekennzeichnet, dass** die Hauptspur und die zweite Spur auf der Platte derart angeordnet sind, dass sich ein bestimmter Adressensektor n auf der zweiten Spur im Wesentlichen gegenüber des Adressensektors (n+k) auf der Hauptspur befindet.

## Claims

1. Mastering process for an optical disk protected against copying of the type comprising a continuous spiral main track (PA), disposed over the entire useful part of the disk and at least one secondary track (PB) nested between successive loops of the main track in such a way that the spacing of the loops remains the same over substantially the whole of the disk, sectors of the secondary track and the corresponding sectors of the adjacent part of the main track in a given radial direction bearing the same addresses (n to n + Q) in such a way as to form two parts of substantially the same size of a protection zone (ZDP), in which the mastering is performed with the aid of a burning beam source, said process being **characterized in that** the sectors of the main track have addresses ordered substantially sequentially along this track, the burning beam source receives the encoded information for burning from a formatter device and **in that** it comprises the steps of:
providing the information encoded with the aid of a formatter to two outputs respectively delivering the information (EFMA) to be burnt onto to the main track (PA) and the information (EFMB) to be burnt onto the secondary track (PB) ;
continuously applying the information to be burnt onto the main track (PA) to said source;
instructing, at a predetermined instant (CAcc) before the chosen start (DRPB) of the useful part of the secondary track, an acceleration of the displacements of said source so as to go from a given initial track spacing to double spacing by way of an acceleration zone (ZAcc);
applying said information to be burnt onto the secondary track to said source with a shift of k sectors with respect to the burning of the start sector of the part of the protection zone on the main track (PA), where k is any predetermined algebraic number;
instructing, at a predetermined instant (CDec) after the end (FRPB) of the useful part of the secondary track, a deceleration of the displacements of said source so as to go from said double spacing to said initial spacing by way of a deceleration zone (ZDec).

2. Mastering process according to Claim 1, **characterized in that**, in a first acquisition phase, the information (EFMB) to be burnt onto the secondary track (PB) is encoded and stored in memory.

3. Mastering process according to one of Claims 1 or 2, **characterized in that** said burning beam source (1) is designed to provide information for synchronization on the actual start (TSAcc; TSDec) of the acceleration and deceleration zones.

4. Mastering process according to Claim 3, **characterized in that** it furthermore comprises the steps of:
applying start infill information (FAcc) to said source for burning onto the secondary track up to the start of its useful part, from the end of a first predetermined timeout interval (TpAcc) after said start of acceleration zone synchronization information (TSAcc) ;
applying end infill information (FDec) to said source for burning onto the secondary track from the end of its useful part, up to the end of a second predetermined timeout interval (TpDec) after said start of deceleration zone synchronization information (TSDec).

5. Mastering process according to Claim 4, **characterized in that** said first and second timeout intervals (TpAcc; TpDec) are chosen so that the burning of the start infill information commences inside the acceleration zone and that the burning of the end infill information terminates inside the deceleration zone.

6. Mastering device for the implementation of the process according to any one of Claims 1 to 5, of the type comprising a burning beam source (1) capable of burning two tracks in parallel, said mastering device being **characterized in that** the burning beam source is capable of going from a burning zone with given initial track spacing to a zone with double spacing and vice versa by acceleration, respectively deceleration, of the beam displacements in response to acceleration (CAcc), respectively deceleration (CDec), instruction signals which are applied to it, **in that** said source is designed to provide signals for synchronization on the actual start (TSAcc; TSDec) of the burnt acceleration and deceleration zones, and **in that** it furthermore comprises:
a formatter device (2) which encodes the information to be burnt so as to apply it to said source,
storage means (3) for the prior acquisition of the information encoded (EFMB) by said formatter device (2) to be burnt onto the secondary track (PB);
restoring means (3) for providing said source (1) with the information to be burnt onto the secondary track including said encoded information stored by said storage means;
management means (3) for instructing said restoring by the restoring means, from encoded information (EFMA) provided by the formatter device to said source for burning onto the main track (PA) and said synchronization signals received from said source;
monitoring means (4) for providing said management means, said source and the formatter device with monitoring information.

7. Device according to Claim 6, **characterized in that** said restoring means (3) are designed to generate and provide infill information (FAcc, DDec) before and after said encoded stored information (EFMB), **in that** said management means are designed to instruct the restoring means on the basis of the encoded information (EFMA) of the main track, of the synchronization signals coming from said source and of the monitoring information coming from the monitoring means and including the start and end addresses of the useful part of the secondary track, of the position of the latter and of timeout intervals for the start of start infill information and end of end infill information instruction.

8. Device according to Claim 7, **characterized in that** said monitoring means (4) receive length and position information for the useful part of the secondary track from a file generated during the premastering operations and information relating to shift (k), timeout intervals and addresses, for formulating the monitoring information sent to said management means, to said source and to the formatter device.

9. Device according to one of Claims 6 to 8, **characterized in that** said restoring means are designed to provide as infill information encoded information (EFMA) provided for burning onto the main track by said formatter device (2).

10. Optical disk protected against copying of the type comprising a continuous spiral main track (PA), disposed over the entire useful part of the disk and at least one secondary track (PB) nested between successive loops of the main track in such a way that the spacing of the loops remains the same over substantially the whole of the disk, sectors of the secondary track and the corresponding sectors of the adjacent part of the main track in a given radial direction bearing the same addresses (n to n + Q) in such a way as to form two parts of substantially the same size of a protection zone (ZDP), said disk being **characterized in that** the sectors of the main track have addresses ordered substantially sequentially along this track, and two sectors with the same address in the protection zone are shifted by a interval of k sectors as measured along the main track, k being any predetermined algebraic number.

11. Disk according to Claim 10, in which the passing from the main track zone (PA), with given initial spacing of the spiral (SP), to the start of the protection zone (ZDP), with spacing of the main track double the initial spacing, and the passing from the end of this protection zone to the main track zone with initial spacing are performed respectively by an acceleration zone (ZAcc) and a deceleration zone (ZDec), said disk being **characterized in that** the useful part of the secondary track (PB) is preceded and followed by burnt infill information (FAcc, FDec) starting in the acceleration zone up to the start of the useful part on the one hand and extending, on the other hand, from the end of the useful part up until the deceleration zone.

12. Disk according to one of Claims 10 or 11, **characterized in that** said gap of k sectors is chosen in such a way as to correspond substantially to half a spiral turn in the zone considered.

13. Disk according to any one of Claims 10 to 12, **characterized in that** the main and secondary tracks are disposed over the disk so that a sector with given address n on the secondary track lies substantially opposite the sector with address (n + k) on the main track.
